# EUROPEAN PATENT SPECIFICATION

(11) **EP 3 492 821 B1**
(45) Date of publication and mention of the grant of the patent: **05.11.2025**
(21) Application number: 18208244.6
(22) Date of filing: 26.11.2018
(51) Int. Cl.: F24D 17/00, E03C 1/10, C02F 1/02, E03B 7/04, E03C 1/00, E03B 7/08, E03C 1/05

(54) **A SYSTEM, A SANITARY FITTING AND A METHOD FOR MONITORING THE TAPPING OF WATER FROM A PLURALITY OF SANITARY TAPPING POINTS**
SYSTEM, SANITÄRARMATUR UND VERFAHREN ZUR ÜBERWACHUNG DER WASSERENTNAHME AUS MEHREREN SANITÄRENTNAHMESTELLEN
SYSTÈME, ÉQUIPEMENT SANITAIRE ET PROCÉDÉ DE SURVEILLANCE DE LA PRISE D'EAU À PARTIR D'UNE PLURALITÉ DE POINTS DE PRÉLÈVEMENT SANITAIRE

(30) Priority: 01.12.2017 DE 102017128636
(43) Date of publication of application: 05.06.2019
(73) Proprietor: ORAS OY, 26100 Rauma (FI)
(72) Inventor: Rautavuori, Janne, 70567 Stuttgart (DE)
(74) Representative: Ostertag & Partner Patentanwälte mbB

(56) References cited:
- GB-A- 2 527 571
- GB-A- 2 530 004
- GB-A- 2 542 249

## Description

### BACKGROUND OF THE INVENTION

### 1. Field of the Invention

The invention concerns a system, a sanitary fitting and a method for monitoring the tapping of water from a plurality of sanitary tapping points.

### 2. Description of the Prior Art

Sanitary installations of public facilities in particular in the health care sector, like e.g. hospitals, homes for the elderly, school buildings, have to follow stringent hygiene regulations. Furthermore, because of already high standards in the public water supply system in many civilized countries moving water is normally not a source of hygienic problems and people expect hygienically flawless water from a sanitary tapping point.

The remaining hygiene risk for a sanitary installation is therefore mainly based on the stagnation of water inside water supply lines which allows for an increase of legionella bacteria. In order to prevent the legionnaires' disease caused by legionella bacteria periodic thermal disinfection procedures have been introduced during which any sanitary fittings in a given facility are flushed with hot water for a given amount of time.

For this purpose sanitary fittings exist which allow for manual or even automatic hot water flushing. However, hot water flushing is costly.

The document DE 10 2016 107 693 A1 describes a method for automatically triggering a stagnation flushing, and a monitoring network for sanitary fittings. The monitoring network comprises EMF-clients working as transceivers for sending out information concerning tapping armatures, mobile or stationary EMF-gateways that are configured to transmit the information to a communication network such as W-LAN, Bluetooth, ZigBee or the like, and a device for the exchange of information that may be formed as a computer or a smartphone. However, the monitoring system described therein has the disadvantage that a monitoring department as part of the facility management is needed that regularly actively checks the automatic flushing system for errors. This results in disadvantageous relatively high costs for the facility management.

The documents GB 253 000 4 A and GB 254 224 9 A both disclose a monitoring arrangement for a water using installation. In both cases, regular and active checks of a monitoring node or a monitor means, respectively, have to be carried out which leads to relatively high costs for the facility management.

In document GB 252 757 1 A, a compact self-powered and automated attachment to a fluid system comprising a turbine for the harvesting of energy is disclosed.

### SUMMARY OF THE INVENTION

Therefore an object of the invention is to provide a system for monitoring the tapping of water from a plurality of sanitary tapping points.

This object of the invention is achieved by a system according to Claim 1.

The inventor has realized that it is important to provide technical aids to monitor the sanitation status of sanitary tapping points. In particular he realized that it is important to provide a solution which allows to check the sanitation status of each individual sanitary tapping point.

Namely, by monitoring if at all, when, and how much water has been tapped at a sanitary tapping point the user of the invention is able to evaluate, if a problematic stagnation of water inside the feed lines towards a sanitary tapping point has occurred. Therefore, one may trigger maintenance actions like hot water flushing only if necessary.

By using a plurality of tapping detection devices which individually detect if water is tapped (withdrawn) from a given sanitary tapping point and transmitting this information to a monitoring node one is able to get a full picture of the sanitation status within a given facility. For this purpose, one tapping detection device may be provided for each monitored sanitary tapping point. However, also solutions may fall under the scope of the invention where one tapping detection device is used for a limited number of sanitary tapping points, in particular if the feed lines to these grouped sanitary tapping points are very short.

In the context of the invention tapping data may include any information, like e.g. unprocessed, preprocessed and/or fully processed signal data, originating from the sensor, which allows to draw conclusions with respect to the tapping at the respective sanitary tapping point.

Although, the transmitter of the tapping detection device may even transmit tapping data directly or indirectly to a monitoring node via a wire connection, according to the invention the a wireless connection is used because this either increases user comfort during read out of the tapping data or this avoids to the necessity to install fixed wire connections to the sanitary tapping points. The monitoring node may comprise a receiver cooperating with the transmitter of the tapping detection device.

According to the invention, the transmitter of the tapping detection device is configured to transmit the tapping data to a mobile gateway via a wireless connection, in particular via Bluetooth, RFID or NFC.

In this case, for example any personal having frequent access to the sanitary installations like e.g. cleaning personal might automatically gather tapping data if they carry along a mobile gateway.

Preferably, a mobile electronic consumer device, like a smart phone, a tablet or a notebook running a gateway app, may be used as a mobile gateway.

According to the invention, the wireless connection is of any active or passive short-range connection type, in particular having a low energy profile. The wireless connection may be unidirectional or bidirectional. Accordingly, the tapping detection device, the monitoring node and/or the gateway will have a respective transceiver instead of a transmitter or receiver only.

According to the invention, the mobile gateway is configured to further transmit the tapping data to the monitoring node via a network connection, in particular via the Internet, GSM and/or WLAN.

The monitoring node may be realized as a server provided e.g. at the monitored facility which runs an appropriate monitoring software evaluating the tapping data. However, the monitoring node may also be cloud solution based e.g. by providing such a server at the manufacturer of the tapping detection devices or of respective sanitary fittings comprising the tapping detection devices.

In particular, the manufacturer may offer a monitoring service and/or even a full service regarding the sanitation requirements to the user. For example the manufacturer may monitor the sanitation status of all the sanitary tapping points and if necessary trigger maintenance teams, e.g. for flushing and/or hot water flushing of the respective sanitary tapping points. The manufacturer may also provide certificates regarding the sanitation status of a monitored facility in order to fulfill hygienic regulations.

Additionally, to using a mobile gateway the monitoring node itself may be mobile, in particular by running a tapping data gathering and monitoring application on a mobile electronic consumer device.

Advantageously, the sensor of the tapping detection device is one of the group consisting of: a flow sensor, a temperature sensor, a vibration sensor, an optical sensor.

Generally, the sensor of the tapping detection device is any sensor which registers any physical quantity which could be used to draw a conclusion on the tapping of water. For example, a flow sensor may include an impeller cooperating with a hall sensor or an optical sensor. A temperature sensor may detect changes in temperature as an indicator for a withdrawal of water.

Furthermore, if a temperature sensor is used for detection of the tapping of water the measured temperature might also be used for further aspects of the monitoring. For example, the measured temperature may be used to accept different time periods of stagnation, e.g. for a hot water line with over 60°C a longer time period of non-tapping may be acceptable than a hot water line with only about 40°C.

According to the invention, the tapping detection device comprises a memory for storing the tapping data.

This allows to read out the tapping data only from time to time. Preferably, the memory is configured to store the tapping data at least until the tapping data is transmitted.

According to the invention, the tapping detection device comprises a timer in order to associate tapping data with a timeline.

Again, this allows to waive a continuous transmittal of tapping data, in which case the monitoring node might be used to associate tapping data with a timeline in order to evaluate on the sanitation status. Instead, already within the tapping detection device the tapping data is stored in association with a timeline, e.g. by storing timestamps with each tapping data point.

Advantageously, the tapping detection device comprises an evaluation unit which evaluates a signal from the sensor in order to detect tapping.

Tapping data may be a merely digitally encoded signal of the sensor which is transmitted to the monitoring node for further evaluation in particular to detect e.g. if at all, when, how long and how much water has been tapped. However, if the tapping detection device already comprises an evaluation unit tapping data may represent higher level information, e.g. if at all, when, how long and how much water has been tapped, or sanitation status, like e.g. tapping needed, no tapping needed, hot water sanitation needed. The evaluation unit may fully process or only preprocess the signal coming from the sensor.

Advantageously, the tapping detection device comprises a parameter memory for storing a configurable parameterization setup.

In particular, if the tapping detection device comprises an evaluation unit a configurable parameterization setup is useful. The parameter memory may be used for parametrizing e.g. a time limit between two tappings of water, a minimum amount of tapped water, a minimum tapping duration and/or a frequency of tappings of water. These parameters might also depend in particular on the temperature of the water used at the sanitary tapping point. For example, a cold water sanitary tapping point has to be used less frequently than a hot water sanitary tapping point in order to avoid problematic stagnation of water. Furthermore, also the length of a supply line towards the sanitary tapping point may be parametrized. For the purpose of parametrization, the tapping detection device may use the same transceiver normally used to transmit tapping data.

Advantageously, the tapping detection device comprises a status indicator indicating a status of the individual sanitary tapping point locally at the sanitary tapping point.

This allows to check on the sanitation status of a sanitary tapping point locally at the respective sanitary installation. On the one hand this might help maintenance personal. On the other hand normal users could avoid accidentally using unsanitized tapping points. For example, the sanitation status may indicate at least one of the group consisting of: tapping needed, no tapping needed, sanitation needed.

The sanitation status might be set internally by the evaluation unit and/or externally by the monitoring node if in response to a transmission of tapping data a bidirectional connection is used to transmit the sanitation status to the tapping detection device.

Advantageously, the tapping detection device comprises an energy harvesting unit.

This allows to provide energy for electronic circuits like the sensor of the tapping detection device while still providing low-maintenance devices. The energy harvesting unit may comprise a photovoltaic cell, a turbine, a peltier element, a pyroelectric crystal and/or a vibrations harvesting device. The tapping detection device may also comprise an electromagnetic radiation antenna, like e.g. used for RFID, which may be provided with energy during read out of the tapping data. The harvested energy may then be stored in an energy storage like a capacitor for later use.

Regarding a method for monitoring the tapping of water from a plurality of sanitary tapping points the object of the invention is achieved with the method according to Claim 8.

According to claim 9, a sanitary fitting comprising a tapping detection device for a system for monitoring the tapping of water from a plurality of sanitary tapping points is provided which is configured to individually detect tapping of the individual sanitary tapping points.

The above described monitoring system relies on a plurality of tapping detection devices in order to monitor many sanitary tapping points in a sanitary installation of a whole facility. Such tapping detection devices may be provide as an add-on device for existing sanitary fittings. For example, the tapping detection device may be provided as an intermediate connection piece for a wall mounted sanitary fitting or as device which may be clipped on the feed line of a wall mounted sanitary fitting, in particular when using the temperature as an indicative physical quantity for tapping of water.

According to another aspect that is not in accordance with the invention and which is closely linked to the monitoring of the tapping of water, but distinct with respect to the location where the monitoring takes place, one may drop use of the monitoring node and the transmitter of the tapping detection device.

Instead one may use a tapping detection device with a status indicator as already described within the monitoring system but without further linkage of the tapping detection device to the monitoring node. In this case the tapping detection device works as a stand-alone device and does not need a transmitter.

Therefore, according to this aspect that is not in accordance with the invention, a tapping detection device is provided which is configured to be connected to a sanitary tapping point to detect tapping of water from the sanitary tapping point, wherein the tapping detection device comprises
a) a sensor and
b) a status indicator indicating a sanitation status of the individual sanitary tapping point.

Such a stand-alone device which is not integrated in a higher level monitoring system may still monitor the sanitation status of a sanitary tapping point and indicate in particular locally this status in order to give the user direct feedback regarding the monitoring.

According to a further aspect that is not in accordance with the invention, a sanitary fitting is provided which is configured to be connected to at least one sanitary tapping point comprising
a) a tapping detection device configured to individually detect tapping of water from the individual sanitary tapping point, wherein the tapping detection device comprises
   - a sensor and
   - a status indicator indicating a sanitation status of the individual sanitary tapping point.

Many of the above mentioned features of the tapping detection device integrated in the monitoring system still apply for the stand-alone devices as well as the stand-alone sanitary fittings and the applicant reserves the right to combine these features with the non-integrated device respectively the sanitary fitting.

Furthermore, applicant hereby explicitly reserves the right to pursue in particular these last inventive ideas with respect to the local indication of the tapping status respectively the sanitation status in separate applications.

### BRIEF DESCRIPTION OF THE DRAWINGS

Various features and advantages of the present invention may be more readily understood with reference to the following detailed description taken in conjunction with the accompanying drawings in which:
- Figure 1: shows a schematic overview over a system for monitoring water tapping according to the invention;
- Figure 2: shows a top view of tapping detection device, which may be mounted intermediate a tapping point of the domestic pipe work and a sanitary fitting;
- Figure 3: shows a top view on two separate tapping devices in particular for hot and cold water tapping points of the domestic pipe work as well as a separate tapping status indicator according to the invention;
- Figure 4: shows a top view of a combined hot and cold water tapping detection device, which may be attached to an existing wall mounted sanitary fitting;
- Figure 5: shows a front view of the combined hot and cold water tapping detection device of Fig. 4;
- Figure 6: shows the combined hot and cold water tapping detection device of Figs. 3 and 4 clipped on an existing wall mounted sanitary fitting.

### DETAILED DESCRIPTION OF PREFERRED EMBODIMENTS

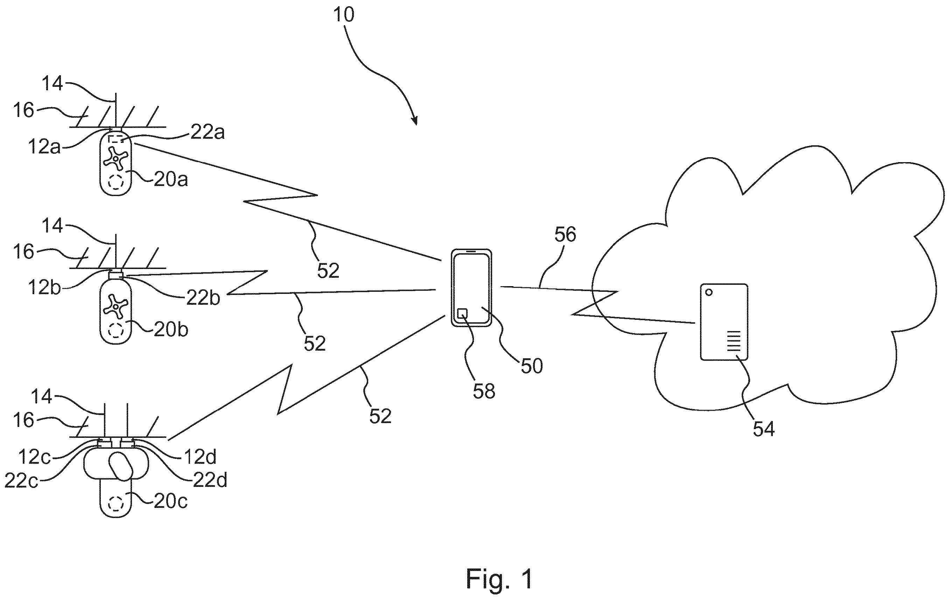

Figure 1 shows a system for monitoring the tapping of water generally referenced with the reference numeral 10 for example in a medical facility.

The monitoring system 10 comprises a plurality of tapping points 12a, 12b, 12c and 12d which are the end points of domestic pipe works 14 installed in or on a wall 16.

These tapping end points 12a, 12b, 12c and 12d are provided with different sanitary fittings according to the local requirements of the sanitary installations to which the tapping point 12a, 12b, 12c or 12d belongs to.

Only exemplarily a sanitary fitting 20a is shown at the tapping point 12a which is signal line faucet for a cold water line.

The sanitary fitting 20a comprises a tapping detection device 22a, which is configured to detect, if and when water is withdrawn from the sanitary fitting 20a and therefore from the sanitary tapping point 12a. Further details of the detection device 22a will be explained later keeping in mind that the sanitary fitting 20a exemplifies the use of an tapping detection device 22a integrated in a sanitary fitting 20a.

As a further example Fig. 1 shows a sanitary fitting 20b which is a usual faucet without any adaptions to the present invention. This sanitary fitting 20b is connected via a tapping detection device 22b to the sanitary tapping point 12b. In this case, the tapping detection device 22b is an intermediate add-on component, which on the one side has connection means for connection with the usual sanitary fittings 20b and on the other side has a corresponding connection means for connection with the sanitary tapping point 12b. Again, details of the tapping detection device 22b will be provided later.

Finally, Fig. 1 shows a single lever sanitary fitting as an example of a sanitary fitting 20c for a combined connection with a hot water sanitary tapping point 12c and a cold water sanitary tapping point 12d. The sanitary fitting 20c is shown as a wall mounted sanitary fitting 20c but could be easily conceived as a concealed sanitary fitting.

Again a usual single lever sanitary fitting 20c is used which is connected via discrete intermediate tapping detection devices 22c and 22d.

The tapping detection devices 22a, 22b, 22c and 22d of Fig. 1 have in common that they comprise some sort of sensor which allows the tapping detection device to detect, if water is withdrawn from the sanitary tapping points 12a, 12b, 12c or 12d.

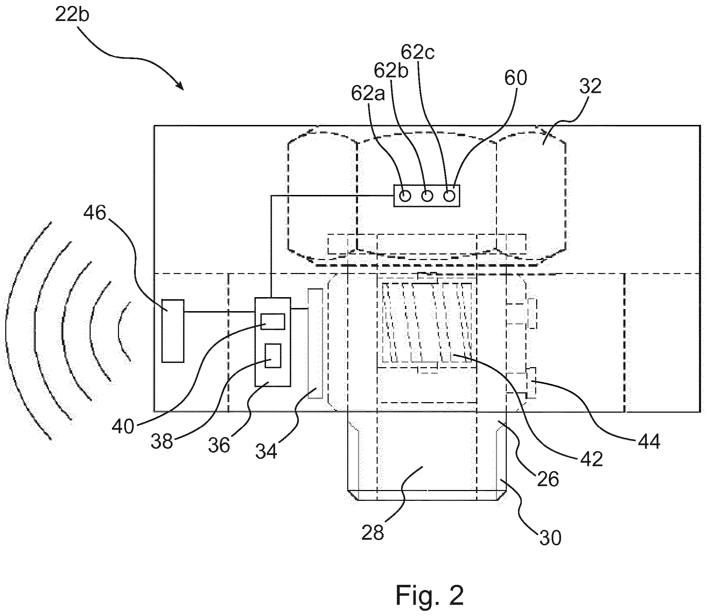

For example, Fig. 2 shows the intermediate tapping detection device 22b (identical to 22c or 22d) having a thermally conductive device body 26 with a water channel 28 running from a first connection means 30 to a second connection means 32.

Furthermore, the tapping detection device 22b comprises a temperature sensor 34 in contact with the device body 26. As the temperature of conductive device body 26 changes when water flows through the water channel 28 an evaluation unit 36 included in the tapping detection device 22b and connected with the temperature sensor 34 is able to detect when water is withdrawn. Such an evaluation unit 36 may be realized using integrated electronic circuits.

A timer 38 allows the tapping detection device 22b to correlate these detections with a time line.

A memory 40 also included in the evaluation unit 36 allows to store these information for later use. Furthermore, the memory 40 may store a parametrization setup for the evaluation unit 36.

Fig. 2 shows, again only exemplarily, a turbine 42 arranged in the water channel 28 of the tapping detection device 22b for providing energy to the evaluation unit 36.

This turbine 42 may also cooperate with a hall sensor 44 which registers the movement speed of the turbine 42 in order to realize a flow meter. This information can additionally or alternatively be used by the evaluation unit 36 to detect the tapping of water.

Furthermore, the tapping detection device 22b comprises transmitters 46, e.g. a wireless NFC-, RFID- or Bluetooth-transmitter.

Coming back to Fig. 1 the monitoring system 10 further comprises tapping data relay gateway 50 e.g. a smart phone, which is able to connect with the transmitters 46 of the individual tapping detection devices 22a, 22b, 22c, 22d via a short-range wireless connection 52 in order to receive tapping data from the tapping detection devices 22a, 22b, 22c, 22d. The relay gateway 50 is further configured to relay these data to a monitoring node 54 via a long-range network connection 56 like WLAN, GSM and/or the internet.

For these purpose the smart phone may run a gateway software app 58.

The monitoring node 54 may for example be a server belonging to the medical facility for which the sanitary tapping points 12a, 12b, 12c, 12d are monitored. Additionally or alternatively, the monitoring node 54 may be provided by the manufacturer of the sanitary fittings 20a respectively the tapping detection devices 22b, 22c, 22d for mounting with standard sanitary fittings 20b and 20c. The manufacturer may then provide a monitoring service for the medical facility. These may include sending a reminder to the medical facility with a list of sanitary tapping points 12a, 12b, 12c, 12d which have not been used to withdraw water and therefore need tapping in order to prevent contamination due to stagnation of water.

If all the sanitary tapping points 12a, 12b, 12c, 12d have been used with a given frequency the manufacturer may certify to the medical facility that the sanitation status is in accordance with any applicable hygienic regulations.

As can been seen from Fig. 2 the tapping detection device 22b for intermediate mounting between the sanitary tapping points 12b, 12c, 12d and a standard sanitary fitting 20b, 20c includes a nut as the second connection means 30 for screwing on the standard thread of the sanitary tapping points 12b, 12c, 12d and a corresponding male thread as the first connection means 32 which cooperates with the fixation nut of a standard sanitary fitting 20b, 20c.

Furthermore, the tapping detection device 22b comprises a hood which comprises a sanitation status indicator 60.

In the shown embodiment, the sanitation status indicator 60 comprises three LEDs 62a, 62b and 62c, in particular in colors green, yellow and red. Such a sanitation status indicator 60 may be used to show the current sanitation status of the sanitary tapping point 12b.

For example an activated green LED 62a may indicate that there was enough tapping of water from the respective sanitary tapping point 12b in a certain given time interval. In contrast, an activated yellow LED 62b may indicate that water stagnation took place to a certain extent and tapping of water is needed in order to keep the respective sanitary tapping point 12b and the associated pipe work 14 clean. An activated red LED 62c may indicate that already a contamination took place due to stagnation of water and a full cycle flushing with hot water is needed to sanitize the sanitary tapping point 12b and the associated pipe work 14.

If the tapping detection device 22b is used with such a locally accessible sanitation status indicator 60, a transmitter 46 is not really required. However, the transmitter 46 may still be used to additionally gather tapping data information as suggested by the monitoring system 10.

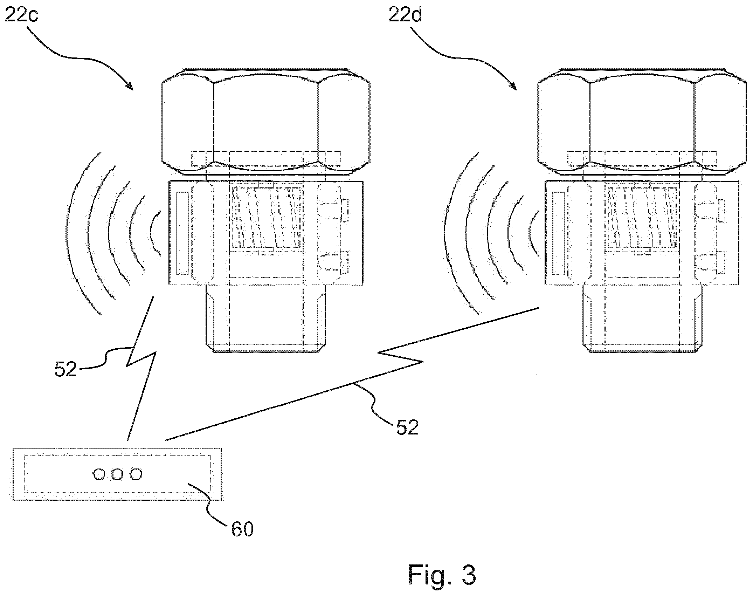

A further embodiment is shown in Fig. 3, wherein two distinct tapping detection device 22c and 22d for mounting with a standard sanitary fitting 20c for hot and cold water sanitary tapping points 12c, 12d are provided.

In this embodiment, again a sanitation status indicator 60 is provided. However, this sanitation status indicator 60 is provided as a separate component apart from the two tapping detection devices 22c, 22d. The sanitation status indicator 60 may therefore be coupled via another short-range wireless connection 52 and may be configured to receive tapping data from the two tapping detection devices 22c, 22d for hot and cold water respectively. In this case, the separate component could be consider to be a monitoring node 54.

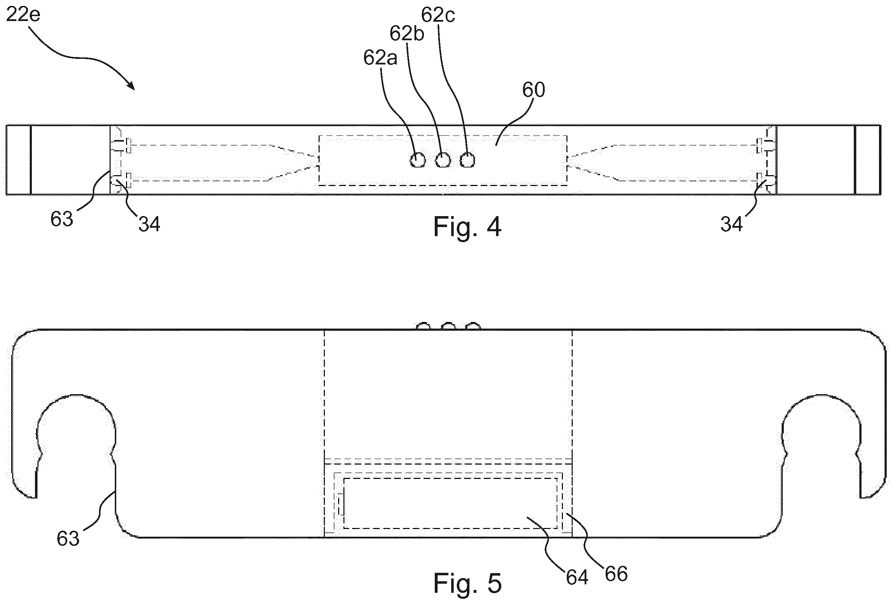

Another embodiment is shown in Figs. 4 and 5, wherein a tapping detection device 22e is shown which may be fitted on pipe connections towards a wall mounted hot and cold water sanitary fitting 20c. The tapping detection device 22e may be clipped over the two feed lines entering the hot and cold water sanitary fitting 20c. For this purpose the tapping detection device 22e comprises two slit shaped recesses 63 for the feed lines having one open side for sliding over the feed lines.

As can be seen from Fig. 4 the tapping detection device uses two temperature sensors 34 for each feed line in order to detect the tapping of water at the respective sanitary tapping point 12c, 12d.

Furthermore, Fig. 5 shows a battery 64 arranged within a battery compartment 66 of the tapping detection device 22e as a power source.

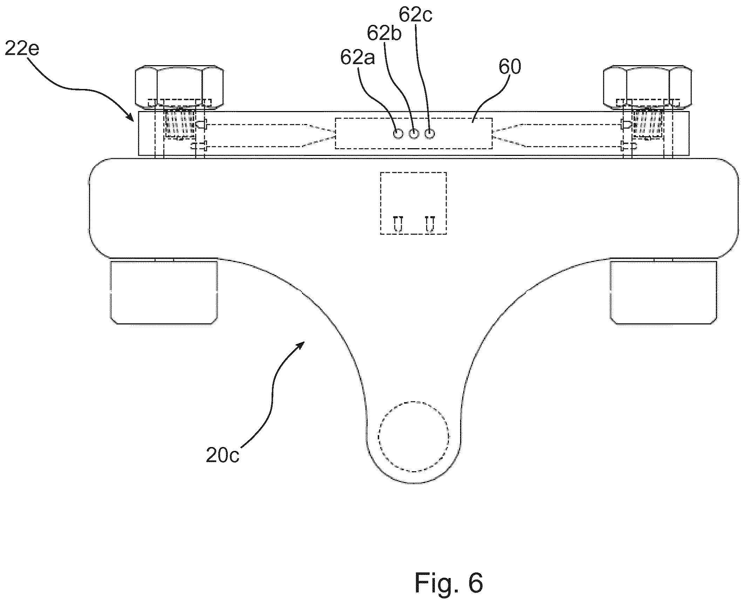

Fig. 6 shows how the tapping detection device 22e of Fig. 4 and 5 is clipped on the feed-lines of a hot and cold water sanitary fitting 20c.

## Claims

1. A system (10) for monitoring the tapping of water from a plurality of sanitary tapping points (12a; 12b; 12c; 12d) comprising
a) a plurality of tapping detection devices (22a; 22b; 22c, 22d; 22e) configured to individually detect tapping of water from the individual sanitary tapping points (12a; 12b; 12c; 12d), wherein each of the tapping detection devices (22a; 22b; 22c, 22d; 22e) comprises
- a sensor (34; 44),
- an evaluation unit (36) which is configured to evaluate a signal from the sensor (34; 44) in order to detect tapping,
- a memory (40) for storing the tapping data,
- a timer (38),
- a transmitter (46) connected with the sensor (44), and
b) a monitoring node (54), **characterized in that** the system (10) further comprises
c) a mobile gateway (50, 58), wherein
d) the memory (40) of the tapping detection device (22a; 22b; 22c, 22d; 22e) is configured to store the tapping data associated with a timeline already within the tapping detection device (22a; 22b; 22c, 22d; 22e), which tapping data has been associated with the timeline using the timer (38) by storing timestamps with each tapping data point, at least until the stored tapping data is transmitted to the mobile gateway (50, 58),
e) the transmitter (46) of the tapping detection device (22a; 22b; 22c, 22d; 22e) is configured to transmit the stored tapping data to the mobile gateway (50, 58) via a short-range wireless connection (52), and
f) the monitoring node (54) cooperates indirectly with the transmitter (46) of the tapping detection device (22a; 22b; 22c, 22d; 22e) in order to receive the stored tapping data such that the mobile gateway (50, 58) is configured to further transmit the stored tapping data to the monitoring node (54) via a network connection (56).

2. The system according to claim 1, **characterized in that** the transmitter of the tapping detection device (22a; 22b; 22c, 22d; 22e) is configured to transmit the tapping data to the mobile gateway (50, 58) via Bluetooth, RFID or NFC.

3. The system according to any of the preceding claims, **characterized in that** the mobile gateway is configured to further transmit the tapping data to the monitoring node (54) via the Internet, GSM and/or WLAN.

4. The system according to any of the preceding claims, **characterized in that** the sensor (34; 44) of the tapping detection device (22a; 22b; 22c, 22d; 22e) is one of the group consisting of: a flow sensor, a temperature sensor, a vibration sensor, an optical sensor.

5. The system according to any of the preceding claims, **characterized in that** the tapping detection device (22a; 22b; 22c, 22d; 22e) comprises a parameter memory (40) for storing a configurable parameterization setup.

6. The system according to any of the preceding claims, **characterized in that** the tapping detection device (22a; 22b; 22c, 22d; 22e) comprises a status indicator (60) indicating a status of the individual sanitary tapping point (12a; 12b; 12c; 12d) locally at the sanitary tapping point (12a; 12b; 12c; 12d).

7. The system according to any of the preceding claims, **characterized in that** the tapping detection device (22a; 22b; 22c, 22d; 22e) comprises an energy harvesting unit (42).

8. A method for monitoring the tapping of water from a plurality of sanitary tapping points comprising the following steps:
a) Providing a plurality of tapping detection devices (22a; 22b; 22c, 22d; 22e) configured to individually detect tapping of water from the individual sanitary tapping points (12a; 12b; 12c; 12d), wherein the tapping detection device (22a; 22b; 22c, 22d; 22e) comprises
- a sensor (34; 44)
- an evaluation unit (36) which is configured to evaluate a signal from the sensor (34; 44) in order to detect tapping,
- a memory (40) for storing the tapping data,
- a timer (38), and
- a transmitter (46) connected with the sensor (34; 44),
b) Providing a monitoring node (54)
c) Monitoring the tapping of water from the plurality of sanitary tapping points (12a; 12b; 12c; 12d), **characterised by** the following steps:
d) Providing a mobile gateway (50, 58);
e) Storing the tapping data in the memory (40) associated with a timeline already within the tapping detection device (22a; 22b; 22c, 22d; 22e) at least until the tapping data is transmitted, wherein the tapping data is associated with the timeline by using the timer (38) and storing timestamps with each tapping data point;
f) Transmitting with the transmitter (46) tapping data to the mobile gateway (50, 58) via a short-range wireless connection (52);
wherein
g) the monitoring node cooperates indirectly with the transmitter (46) of the tapping detection device (22a; 22b; 22c, 22d; 22e) in order to receive the tapping data such that the mobile gateway (50, 58) further transmits the tapping data to the monitoring node (54) via a network connection (56);
h) and the monitoring of the tapping of water includes evaluating the tapping data received from the mobile gateway (50, 58).

9. A sanitary fitting (20a) comprising a tapping detection device (22a; 22b; 22c, 22d; 22e) for a system (10) for monitoring the tapping of water from a plurality of sanitary tapping points (12a; 12b; 12c; 12d) configured to individually detect tapping of water from the individual sanitary tapping points (12a; 12b; 12c; 12d) wherein the tapping detection device (22a; 22b; 22c, 22d; 22e) comprises
a) a sensor (34; 44)
b) an evaluation unit (36) which is configured to evaluate a signal from the sensor (34; 44) in order to detect tapping,
c) a memory (40) for storing the tapping data
d) a timer (38), and
e) a transmitter (46) connected with the sensor (34; 44),
**characterized in that**
f) the memory (40) of the tapping detection device (22a; 22b; 22c, 22d; 22e) is configured to store the tapping data associated with a timeline already within the tapping detection device (22a; 22b; 22c, 22d; 22e), which tapping data has been associated with the timeline using the timer (38) by storing timestamps with each tapping data point, at least until the stored tapping data is transmitted to a mobile gateway (50, 58),
g) wherein the transmitter (46) is configured to transmit the stored tapping data to the mobile gateway (50, 58) via a short-range wireless connection (52).

## Patentansprüche

1. Ein System (10) zum Überwachen des Zapfens von Wasser von einer Vielzahl von Sanitärzapfstellen (12a; 12b; 12c; 12d), aufweisend
a) eine Vielzahl von Zapferkennungsvorrichtungen (22a; 22b; 22c, 22d; 22e), die dazu eingerichtet sind, Zapfen von Wasser von den einzelnen Sanitärzapfstellen (12a; 12b; 12c; 12d) individuell zu erkennen, wobei jede der Zapferkennungsvorrichtungen (22a; 22b; 22c, 22d; 22e) aufweist
- einen Sensor (34; 44),
- eine Auswerteeinheit (36), welche dazu eingerichtet ist, ein Signal vom Sensor (34; 44) auszuwerten, um Zapfen zu erkennen,
- einen Speicher (40) zum Speichern der Zapfdaten,
- einen Timer (38),
- einen Sender (46), der mit dem Sensor (44) verbunden ist, and
b) einen Überwachungsknoten (54),
**dadurch gekennzeichnet, dass** das System (10) ferner aufweist
c) ein mobiles Gateway (50, 58),
wobei
d) der Speicher (40) der Zapferkennungsvorrichtung (22a; 22b; 22c, 22d; 22e) dazu eingerichtet ist, bereits in der Zapferkennungsvorrichtung (22a; 22b; 22c, 22d; 22e) die Zapfdaten einem Zeitstrahl zugeordnet zu speichern, zumindest bis die gespeicherten Zapfdaten an das mobile Gateway (50, 58) übermittelt wurden, wobei die Zapfdaten dem Zeitstrahl unter Verwendung des Timers (38) durch Speichern von Zeitstempeln mit jedem Zapfdatenpunkt zugeordnet wurden,
e) der Sender (46) der Zapferkennungsvorrichtung (22a; 22b; 22c, 22d; 22e) dazu eingerichtet ist, die gespeicherten Zapfdaten an das mobile Gateway (50, 58) über eine kabellose Kurzstreckenverbindung (52) zu senden, und
f) der Überwachungsknoten (54) indirekt mit dem Sender (46) der Zapferkennungsvorrichtung (22a; 22b; 22c, 22d; 22e) zusammenwirkt, um die gespeicherten Zapfdaten derart zu empfangen, dass das mobile Gateway (50, 58) dazu eingerichtet ist, die gespeicherten Zapfdaten an den Überwachungsknoten (54) über eine Netzwerkverbindung (56) weiterzusenden.

2. Das System nach Anspruch 1, **dadurch gekennzeichnet, dass** der Sender der Zapferkennungsvorrichtung (22a; 22b; 22c, 22d; 22e) dazu eingerichtet ist, die Zapfdaten über Bluetooth, RFID oder NFC an das mobile Gateway (50, 58) zu senden.

3. Das System nach einem der vorhergehenden Ansprüche, **dadurch gekennzeichnet, dass** das mobile Gateway dazu eingerichtet ist, die Zapfdaten über das Internet, GSM und/oder WLAN an den Überwachungsknoten (54) weiterzusenden.

4. Das System nach einem der vorhergehenden Ansprüche, **dadurch gekennzeichnet, dass** der Sensor (34; 44) der Zapferkennungsvorrichtung (22a; 22b; 22c, 22d; 22e) einer aus der Gruppe ist, die sich aus einem Durchflusssensor, einem Temperatursensor, einem Vibrationssensor, einem optischen Sensor zusammensetzt.

5. Das System nach einem der vorhergehenden Ansprüche, **dadurch gekennzeichnet, dass** die Zapferkennungsvorrichtung (22a; 22b; 22c, 22d; 22e) einen Parameterspeicher (40) zum Speichern einer konfigurierbaren Parametriereinstellung aufweist.

6. Das System nach einem der vorhergehenden Ansprüche, **dadurch gekennzeichnet, dass** die Zapferkennungsvorrichtung (22a; 22b; 22c, 22d; 22e) eine Zustandsanzeige (60) aufweist, welche einen Zustand der jeweiligen Sanitärzapfstelle (12a; 12b; 12c; 12d) lokal an der Sanitärzapfstelle (12a; 12b; 12c; 12d) anzeigt.

7. Das System nach einem der vorhergehenden Ansprüche, **dadurch gekennzeichnet, dass** die Zapferkennungsvorrichtung (22a; 22b; 22c, 22d; 22e) eine Energiegewinnungseinheit (42) aufweist.

8. Ein Verfahren zum Überwachen des Zapfens von Wasser von einer Vielzahl von Sanitärzapfstellen, aufweisend die folgenden Schritte:
a) Bereitstellen einer Vielzahl von Zapferkennungsvorrichtungen (22a; 22b; 22c, 22d; 22e), die dazu eingerichtet sind, Zapfen von Wasser von den einzelnen Sanitärzapfstellen (12a; 12b; 12c; 12d) individuell zu erkennen, wobei die Zapferkennungsvorrichtung (22a; 22b; 22c, 22d; 22e) aufweist
- einen Sensor (34; 44),
- eine Auswerteeinheit (36), welche dazu eingerichtet ist, ein Signal vom Sensor (34; 44) auszuwerten, um Zapfen zu erkennen,
- einen Speicher (40) zum Speichern der Zapfdaten,
- einen Timer (38),
- einen Sender (46), der mit dem Sensor (44) verbunden ist;
b) Bereitstellen eines Überwachungsknotens (54);
c) Überwachen des Zapfens von Wasser von der Vielzahl von Sanitärzapfstellen (12a; 12b; 12c; 12d);
d) Bereitstellen eines mobilen Gateways (50, 58);
e) Speichern der Zapfdaten, die bereits in der Zapferkennungsvorrichtung (22a; 22b; 22c, 22d; 22e) einem Zeitstrahl zugeordnet sind, in dem Speicher (40), zumindest bis die gespeicherten Zapfdaten an das mobile Gateway (50, 58) übermittelt wurden, wobei die Zapfdaten dem Zeitstrahl unter Verwendung des Timers (38) durch Speichern von Zeitstempeln mit jedem Zapfdatenpunkt zugeordnet wurden;
f) Senden der Zapfdaten mit dem Sender (46) an das mobile Gateway (50, 58) über eine kabellose Kurzstreckenverbindung (52);
wobei
g) der Überwachungsknoten (54) indirekt mit dem Sender (46) der Zapferkennungsvorrichtung (22a; 22b; 22c, 22d; 22e) zusammenwirkt, um die Zapfdaten derart zu empfangen, dass das mobile Gateway (50, 58) die Zapfdaten an den Überwachungsknoten (54) über eine Netzwerkverbindung (56) weitersendet,
h) und das Überwachen des Zapfens von Wasser beinhaltet, die von dem mobilen Gateway (50, 58) empfangenen Zapfdaten auszuwerten.

9. Eine Sanitärarmatur (20a), die eine Zapferkennungsvorrichtung (22a; 22b; 22c, 22d; 22e) für ein System (10) zum Überwachen des Zapfens von Wasser von einer Vielzahl von Sanitärzapfstellen (12a; 12b; 12c; 12d) aufweist, das dazu eingerichtet ist, Zapfen von Wasser von den einzelnen Sanitärzapfstellen (12a; 12b; 12c; 12d) individuell zu erkennen, wobei die Zapferkennungsvorrichtung (22a; 22b; 22c, 22d; 22e) aufweist,
a) einen Sensor (34; 44),
b) eine Auswerteeinheit (36), welche dazu eingerichtet ist, ein Signal vom Sensor (34; 44) auszuwerten, um Zapfen zu erkennen,
c) einen Speicher (40) zum Speichern der Zapfdaten,
d) einen Timer (38),
e) einen Sender (46), der mit dem Sensor (44) verbunden ist, and
**dadurch gekennzeichnet, dass**
f) der Speicher (40) der Zapferkennungsvorrichtung (22a; 22b; 22c, 22d; 22e) dazu eingerichtet ist, bereits in der Zapferkennungsvorrichtung (22a; 22b; 22c, 22d; 22e) die Zapfdaten einem Zeitstrahl zugeordnet zu speichern, zumindest bis die gespeicherten Zapfdaten an das mobile Gateway (50, 58) übermittelt wurden, wobei die Zapfdaten dem Zeitstrahl unter Verwendung des Timers (38) durch Speichern von Zeitstempeln mit jedem Zapfdatenpunkt zugeordnet wurden,
g) der Sender (46) dazu eingerichtet ist, die gespeicherten Zapfdaten an das mobile Gateway (50, 58) über eine kabellose Kurzstreckenverbindung (52) zu senden.

## Revendications

1. Système (10) pour surveiller le captage d'eau d'une pluralité de points de captage sanitaires (12a ; 12b ; 12c ; 12d) comprenant
a) une pluralité de dispositifs de détection de captage (22a ; 22b ; 22c ; 22d ; 22e) configurés pour détecter individuellement le captage d'eau des points de captage sanitaires individuels (12a ; 12b ; 12c ; 12d), dans lequel chacun des dispositifs de détection de captage (22a ; 22b ; 22c ; 22d ; 22e) comprend
- un capteur (34 ; 44),
- un module d'évaluation (36) qui est configuré pour évaluer un signal provenant du capteur (34 ; 44) afin de détecter le captage,
- une mémoire (40) pour stocker les données de captage,
- un minuteur (38),
- un émetteur (46) connecté au capteur (44), et
b) un nœud de surveillance (54),
**caractérisé en ce que** le système (10) comprend en outre
c) une passerelle mobile (50, 58),
dans lequel
d) la mémoire (40) du dispositif de détection de captage (22a ; 22b ; 22c ; 22d ; 22e) est configurée pour stocker les données de captage associées à une chronologie déjà au sein du dispositif de détection de captage (22a ; 22b ; 22c ; 22d ; 22e), lesquelles données de captage ont été associées à la chronologie en utilisant le minuteur (38) en stockant des estampilles temporelles avec chaque point de données de captage, au moins jusqu'à ce que les données de captage stockées soient transmises à la passerelle mobile (50, 58),
e) l'émetteur (46) du dispositif de détection de captage (22a ; 22b ; 22c ; 22d ; 22e) est configuré pour transmettre les données de captage stockées à la passerelle mobile (50, 58) par le biais d'une connexion sans fil à courte portée (52), et
f) le nœud de surveillance (54) coopère indirectement avec l'émetteur (46) du dispositif de détection de captage (22a ; 22b ; 22c ; 22d ; 22e) afin de recevoir les données de captage stockées de sorte que la passerelle mobile (50, 58) est configurée pour transmettre en outre les données de captage stockées au nœud de surveillance (54) par le biais d'une connexion réseau (56).

2. Système selon la revendication 1, **caractérisé en ce que** l'émetteur du dispositif de détection de captage (22a ; 22b ; 22c ; 22d ; 22e) est configuré pour transmettre les données de captage à la passerelle mobile (50, 58) par le biais de Bluetooth, RFID ou NFC.

3. Système selon l'une quelconque des revendications précédentes, **caractérisé en ce que** la passerelle mobile est configurée pour transmettre en outre les données de captage au nœud de surveillance (54) par le biais d'Internet, GSM et/ou WLAN.

4. Système selon l'une quelconque des revendications précédentes, **caractérisé en ce que** le capteur (34 ; 44) du dispositif de détection de captage (22a ; 22b ; 22c ; 22d ; 22e) est un du groupe constitué de : un débitmètre, un capteur de température, un capteur de vibration, un capteur optique.

5. Système selon l'une quelconque des revendications précédentes, **caractérisé en ce que** le dispositif de détection de captage (22a ; 22b ; 22c ; 22d ; 22e) comprend une mémoire de paramètres (40) pour stocker une configuration de paramétrisation configurable.

6. Système selon l'une quelconque des revendications précédentes, **caractérisé en ce que** le dispositif de détection de captage (22a ; 22b ; 22c ; 22d ; 22e) comprend un indicateur de statut (60) indiquant un statut du point de captage sanitaire individuel (12a ; 12b ; 12c ; 12d) localement au point de captage sanitaire (12a ; 12b ; 12c ; 12d).

7. Système selon l'une quelconque des revendications précédentes, **caractérisé en ce que** le dispositif de détection de captage (22a ; 22b ; 22c ; 22d ; 22e) comprend un module de récupération d'énergie (42).

8. Procédé pour surveiller le captage d'eau d'une pluralité de points de captage sanitaires comprenant les étapes suivantes :
a) fournir une pluralité de dispositifs de détection de captage (22a ; 22b ; 22c ; 22d ; 22e) configurés pour détecter individuellement le captage d'eau des points de captage sanitaires individuels (12a ; 12b ; 12c ; 12d), dans lequel le dispositif de détection de captage (22a ; 22b ; 22c ; 22d ; 22e) comprend
- un capteur (34 ; 44),
- un module d'évaluation (36) qui est configuré pour évaluer un signal provenant du capteur (34 ; 44) afin de détecter le captage,
- une mémoire (40) pour stocker les données de captage,
- un minuteur (38), et
- un émetteur (46) connecté au capteur (34 ; 44),
b) fournir un nœud de surveillance (54),
c) surveiller le captage d'eau à partir de la pluralité de points de captage sanitaires (12a ; 12b ; 12c ;
d) fournir une passerelle mobile (50, 58) ;
e) stocker les données de captage dans la mémoire (40) associées à une chronologie déjà au sein du dispositif de détection de captage (22a ; 22b ; 22c ; 22d ; 22e) au moins jusqu'à ce que les données de captage soient transmises, dans lequel les données de captage sont associées à la chronologie en utilisant le minuteur (38) et en stockant des estampilles temporelles avec chaque point de données de captage ;
f) transmettre avec l'émetteur (46) des données de captage à la passerelle mobile (50, 58) par le biais d'une connexion sans fil à courte portée (52) ;
dans lequel
g) le nœud de surveillance coopère indirectement avec l'émetteur (46) du dispositif de détection de captage (22a ; 22b ; 22c ; 22d ; 22e) afin de recevoir les données de captage de sorte que la passerelle mobile (50, 58) transmet en outre les données de captage au nœud de surveillance (54) par le biais d'une connexion réseau (56) ;
h) et la surveillance du captage d'eau inclut évaluer les données de captage reçues de la passerelle mobile (50, 58).

9. Accessoire sanitaire (20a) comprenant un dispositif de détection de captage (22a ; 22b ; 22c ; 22d ; 22e) pour un système (10) pour surveiller le captage d'eau d'une pluralité de points de captage sanitaires (12a ; 12b ; 12c ; 12d) configurés pour détecter individuellement le captage d'eau des points de captage sanitaires individuels (12a ; 12b ; 12c ; 12d), dans lequel le dispositif de détection de captage (22a ; 22b ; 22c ; 22d ; 22e) comprend
a) un capteur (34 ; 44),
b) un module d'évaluation (36) qui est configuré pour évaluer un signal provenant du capteur (34 ; 44) afin de détecter le captage,
c) une mémoire (40) pour stocker les données de captage,
d) un minuteur (38), et
e) un émetteur (46) connecté au capteur (34 ; 44),
**caractérisé en ce que**
f) la mémoire (40) du dispositif de détection de captage (22a ; 22b ; 22c ; 22d ; 22e) est configurée pour stocker les données de captage associées à une chronologie déjà au sein du dispositif de détection de captage (22a ; 22b ; 22c ; 22d ; 22e), lesquelles données de captage ont été associées à la chronologie en utilisant le minuteur (38) en stockant des estampilles temporelles avec chaque point de données de captage, au moins jusqu'à ce que les données de captage stockées soient transmises à une passerelle mobile (50, 58),
g) l'émetteur (46) est configuré pour transmettre les données de captage stockées à la passerelle mobile (50, 58) par le biais d'une connexion sans fil à courte portée (52).
